# EUROPÄISCHE PATENTSCHRIFT

(11) **EP 2 222 496 B1**
(45) Veröffentlichungstag und Bekanntmachung des Hinweises auf die Patenterteilung: **08.06.2011**
(21) Anmeldenummer: 08864536.1
(22) Anmeldetag: 08.12.2008
(51) Int. Cl.: B60K 17/16

(54) **GETRIEBEVORRICHTUNG MIT WENIGSTENS ZWEI AUSGANGSWELLEN UND MINDESTENS ZWEI MEHRWELLIGEN PLANETENRADSÄTZEN**
TRANSMISSION DEVICE COMPRISING AT LEAST TWO OUTPUT SHAFTS AND AT LEAST TWO MULTI-SHAFT PLANETARY GEAR SETS
SYSTÈME DE BOÎTE DE VITESSES POURVU D'AU MOINS DEUX ARBRES DE SORTIE ET D'AU MOINS DEUX TRAINS ÉPICYCLOÏDAUX À PLUSIEURS ARBRES

(30) Priorität: 20.12.2007 DE 102007055882
(43) Veröffentlichungstag der Anmeldung: 01.09.2010
(73) Patentinhaber: ZF Friedrichshafen AG, 88038 Friedrichshafen (DE); Forschungsgesellschaft für Zahnräder und Getriebe mbH, 85748 Garching (DE)
(72) Erfinder: PELCHEN, Christoph, 88069 Tettnang (DE); ROSEMEIER, Thomas, 88074 Meckenbeuren (DE); HÖHN, Bernd-Robert, 81925 München (DE)
(86) Internationale Anmeldenummer: PCT/EP2008/066979
(87) Internationale Veröffentlichungsnummer: WO 2009/080474

(56) Entgegenhaltungen:
- EP-A- 0 224 144
- WO-A-2005/110790
- DE-A1-102005 021 023
- DE-A1-102006 031 089

## Beschreibung

Die Erfindung betrifft eine Getriebevorrichtung mit wenigstens zwei Ausgangswellen und mit mindestens zwei miteinander in Wirkverbindung stehenden mehrwelligen Planetenradsätzen gemäß der im Oberbegriff des Patentanspruches 1 näher definierten Art.

Aus der DE 10 2006 031 089.6 ist eine Antriebsvorrichtung für Kraftfahrzeuge zum Antrieb einer Fahrzeugachse eines Kraftfahrzeuges mit zwei Rädern, die über zwei Planetenradsätze miteinander in Wirkverbindung stehen, bekannt. Der erste Planetenradsatz ist als ein so genannter Stufenplanetenradsatz mit Stufenplaneten ausgeführt, während der zweite Planetenradsatz als ein so genannter Plusplanetenradsatz mit schaltbarer Wendestufe ausbildet ist. Jeweils eine Welle eines Planetenradsatzes ist mit einer mit einem Rad verbundenen Antriebswelle bzw. mit einer Ausgangswelle der Antriebsvorrichtung in Wirkverbindung bringbar. Darüber hinaus ist eine Schalteinrichtung vorgesehen, mittels welcher ein erster Leitungspfad oder ein zweiter Leistungspfad zwischen den Rädern der Fahrzeugachse zuschaltbar ist. Ferner ist aus Dokument WO 2005/110790A2 eine weitere Antriebsvorrichtung bekannt.

Im Bereich einer weiteren Welle eines der Planetenradsätze ist ein Drehmoment einer elektrischen Maschine in den ersten oder den zweiten Leistungspfad einleitbar. Das Drehmoment der elektrischen Maschine ist bei geschaltetem ersten Leistungspfad zu gleichen Teilen und mit gleichen Vorzeichen und bei geschaltetem zweiten Leistungspfad zu gleichen Teilen mit unterschiedlichen Vorzeichen zu den Ausgangswellen bzw. den Rädern der Fahrzeugachse führbar, um im Bereich der Fahrzeugachse während eines ersten Betriebsmodus ein Antriebsmoment zur Verfügung zu stellen oder während eines zweiten Betriebsmodus zur Verbesserung eines Fahrverhaltens eines Fahrzeuges das von der elektrischen Maschine erzeugte Drehmoment zu gleichen Teilen jedoch mit unterschiedlichen Vorzeichen zwischen den Rädern der Fahrzeugachse zu verteilen und diesen zuzuführen.

Die elektrische Maschine ist koaxial zu einer mit einem Steg des Stufenplanetenradsatzes verbundenen Antriebswelle, über welche ein Drehmoment zu einem der Antriebsräder der Fahrzeugachse führbar ist, und zwischen dem Stufenplanetenradsatz und dem Antriebsrad in einem Bereich eines Kraftfahrzeuges angeordnet, in dem nur begrenzt Bauraum für die Anordnung einer elektrische Maschine zur Verfügung steht. Aus diesem Grund ist die Antriebsvorrichtung nachteilhafterweise nur mit elektrischen Maschinen ausführbar, die einen an den zur Verfügung stehenden Bauraum angepassten Bauraumbedarf aufweisen und deren Leistungsangebot für verschiedene Anforderungen nicht ausreichend ist.

Der vorliegenden Erfindung liegt daher die Aufgabe zugrunde, eine Getriebevorrichtung mit wenigstens zwei Ausgangswellen und mit mindestens zwei miteinander in Wirkverbindung stehenden mehrwelligen Planetenradsätzen zur Verfügung zu stellen, mit der die beiden vorbeschriebenen Betriebsmodi darstellbar sind und die mit Elektromotoren kombinierbar ist, die ein für die Darstellung der Betriebsmodi ausreichend hohes Leistungsangebot zur Verfügung stellen.

Erfindungsgemäß wird diese Aufgabe mit einer Getriebevorrichtung mit den Merkmalen des Patentanspruches 1 gelöst.

Die erfindungsgemäße Getriebevorrichtung ist mit wenigstens zwei Ausgangswellen und mit mindestens zwei miteinander in Wirkverbindung stehenden mehrwelligen Planetenradsätzen ausgeführt. Jeweils eine Welle eines Planetenradsatzes ist mit einer Ausgangswelle der Getriebevorrichtung in Wirkverbindung bringbar. Zusätzlich ist eine Schalteinrichtung vorgesehen, über welche zwischen einem ersten Leistungspfad und einem zweiten Leistungspfad zwischen den Ausgangswellen der Getriebevorrichtung umschaltbar ist, wobei im Bereich einer weiteren Welle eines der Planetenradsätze ein Drehmoment einer elektrischen Maschine in den ersten oder den zweiten Leistungspfad einleitbar ist. Das Drehmoment der elektrischen Maschine wird bei zugeschaltetem ersten Leistungspfad zu gleichen Teilen und mit gleichen Vorzeichen und bei zugeschaltetem zweiten Leistungspfad zu gleichen Teilen mit unterschiedlichen Vorzeichen zu den Ausgangswellen geführt. Eine Ausgangswelle der elektrischen Maschine ist lotrecht zu einer der Ausgangswellen der Getriebevorrichtung angeordnet.

Damit ist die elektrische Maschine der Getriebevorrichtung nach der Erfindung aus einem bezüglich des Bauraumangebotes limitierten Bereich zwischen einem der Planetenradsätze der Getriebevorrichtung und einem Antriebsrad eines Fahrzeuges in einem hinsichtlich des Bauraumangebotes in geringerem Umfang limitierten Bereich anordenbar. Die Getriebevorrichtung nach der Erfindung ist auf einfache und kostengünstige Art und Weise mit ausreichend groß dimensionierten elektrischen Maschinen kombinierbar, womit für die Darstellung der beiden Betriebsmodi, d. h. des Antriebsmodus oder des Torque-Vectoring-Betriebsmodus, erforderliche Leistung von der der Getriebevorrichtung zugeordneten elektrischen Maschine in gewünschtem Umfang zur Verfügung stellbar ist.

Nachfolgend wird unter dem Begriff Minusplanetenradsatz oder Minusgetriebe ein Planetengetriebe mit negativer Standübersetzung bezeichnet. Zusätzlich wird als Plusplanetenradsatz oder als Plusgetriebe ein Planetengetriebe mit positiver Standgetriebeübersetzung angesehen, wobei die Standgetriebeübersetzung das Verhältnis zwischen den Winkelgeschwindigkeiten bzw. den Drehzahlen der Zentralradwellen in einem Planetengetriebe bei stillstehendem oder als stillstehend gedachtem Steg darstellt.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zugunsten der Übersichtlichkeit in der Beschreibung der Ausführungsbeispiele für bau- und funktionsgleiche Bauteile die selben Bezugszeichen verwendet werden.

Es zeigt:
- Fig. 1: eine stark schematisierte Darstellung eines im Bereich einer Fahr- zeughinterachse mit der erfindungsgemäßen Getriebevorrichtung ausgebildeten Fahrzeuges;
- Fig. 2: eine Fig. 1 entsprechende Darstellung eines Fahrzeuges, welches im Bereich einer Fahrzeugvorderachse mit der Getriebevorrich- tung nach der Erfindung ausgeführt ist;
- Fig. 3: ein Räderschema eines ersten Ausführungsbeispieles der Ge- triebevorrichtung gemäß Fig. 1 und Fig. 2;
- Fig. 4: ein Räderschema eines zweiten Ausführungsbeispieles der Ge- triebevorrichtung gemäß Fig. 1 und Fig. 2;und
- Fig. 5: eine dritte Ausführungsform der Getriebevorrichtung gemäß Fig. 1 und Fig. 2 mit einem Plusplanetenradsatz.

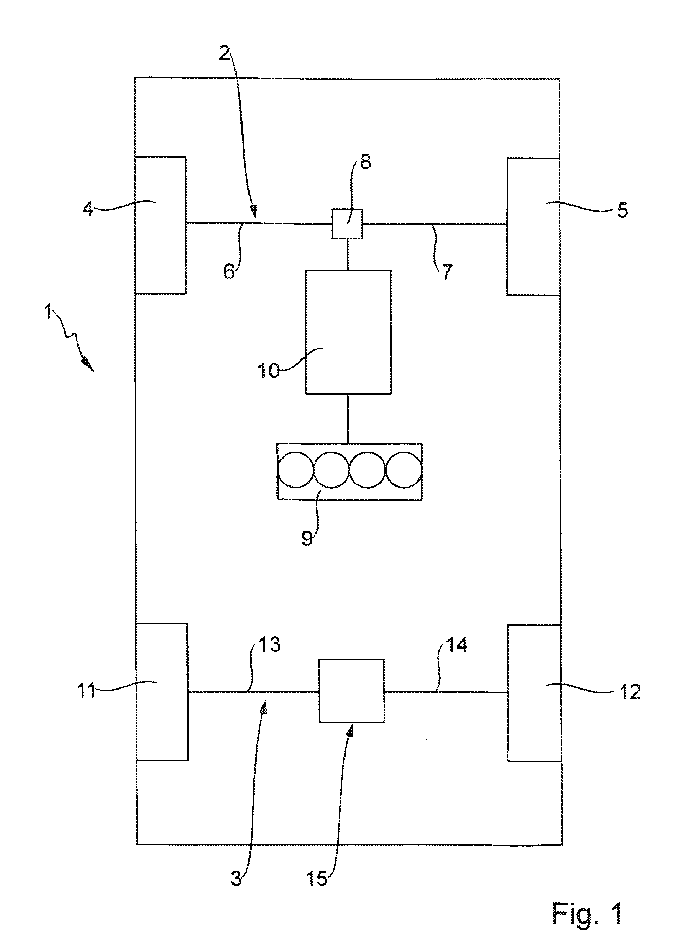

In Fig. 1 ist eine stark schematisierte Darstellung eines Fahrzeuges 1 mit einer ersten Fahrzeugachse 2 und einer zweiten Fahrzeugachse 3 gezeigt, wobei die erste Fahrzeugachse 2 eine Fahrzeugvorderachse und die zweite Fahrzeugachse 3 eine Fahrzeughinterachse des Fahrzeuges 1 darstellt. Die erste Fahrzeugachse 2 umfasst zwei Antriebsräder 4, 5, welche über zwei Antriebswellen 6, 7 mit einer Differentialgetriebeeinheit 8 verbunden sind. Mittels der Differentialgetriebeeinheit 8 wird ein von einem vorliegend als Brennkraftmaschine ausgebildeten Antriebsaggregat 9 erzeugtes Antriebsmoment zu gleichen Teilen auf die beiden Antriebsräder 4 und 5 verteilt. Darüber hinaus ist zwischen dem Antriebsaggregat 9 und der Differentialgetriebeeinheit 8 eine Getriebeeinrichtung 10 vorgesehen, die als Handschaltgetriebe, als Automatgetriebe oder als automatisiertes Handschaltgetriebe ausgeführt sein kann und mittels welcher in an sich bekannter Art und Weise verschiedene stufenlos einstellbare Übersetzungen oder Übersetzungsstufen darstellbar sind.

Die zweite Fahrzeugachse 3 umfasst ebenfalls zwei Antriebsräder 11, 12, die über zwei Antriebswellen 13, 14 und eine Getriebevorrichtung 15 miteinander in Wirkverbindung stehen, um im Bereich der zweiten Fahrzeugachse 3 während eines Antriebsmodus im Bereich der Antriebsräder 11, 12 ein Drehmoment zur Verfügung zu stellen oder während eines Torque-Vectoring-Betriebsmodus ein Fahrverhalten positiv beeinflussen zu können. Damit ist das Fahrzeug 1 gemäß Fig. 1 bei deaktivierter Getriebevorrichtung 15 frontgetrieben, während das Fahrzeug 1 im Antriebsmodus der Getriebevorrichtung 15 im Bereich beider Fahrzeugachsen angetrieben wird und damit einem vierradangetriebenen Fahrzeug entspricht. Wird die Antriebseinheit 9 deaktiviert, d. h., die Brennkraftmaschine steht, kann die aktivierte Getriebevorrichtung 15 das Fahrzeug antreiben. Handelt es sich bei dem Antriebsmotor der Getriebevorrichtung z. B. um einen Elektromotor, kann das Fahrzeug elektrisch gefahren werden (Hybridantrieb). Voraussetzung dafür ist ein entsprechend ausgelegter Energiespeicher. Im Torque-Vectoring-Betriebsmodus der Getriebevorrichtung 15 wird das Fahrzeug 1 im Bereich der Fahrzeugvorderachse angetrieben und das Fahrverhalten mit einer "aktiven" Fahrzeughinterachse beeinflusst.

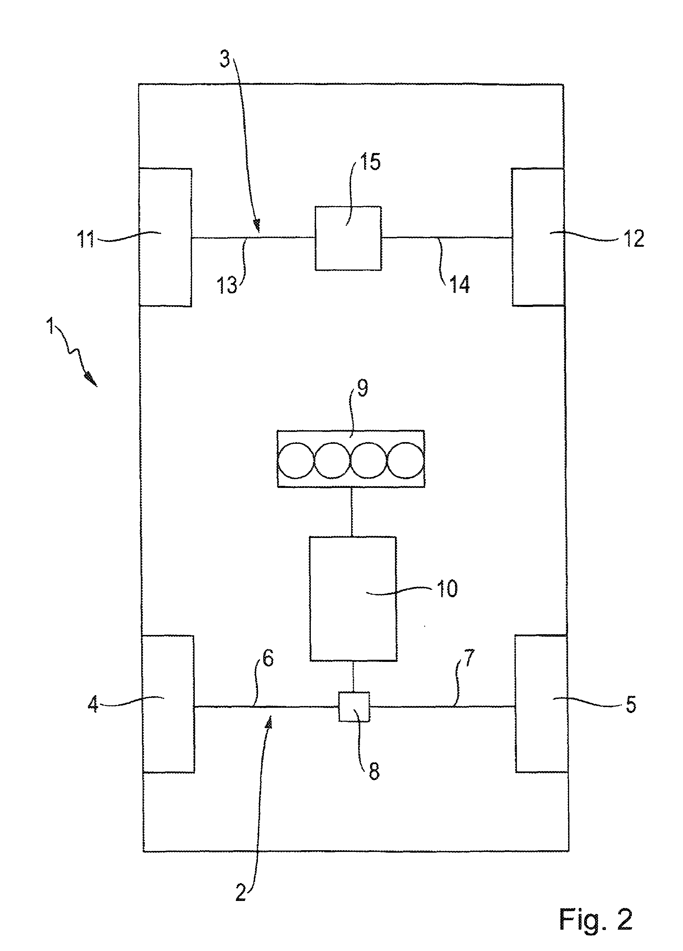

Bei dem in Fig. 2 dargestellten zweiten Ausführungsbeispiel des Kraftfahrzeuges 1 ist die erste Fahrzeugachse 2 die Fahrzeughinterachse und die zweite Fahrzeugachse 3 die Fahrzeugvorderachse des Kraftfahrzeuges 1, so dass das Fahrzeug bei inaktiver Getriebevorrichtung 15 als rein heckgetriebenes Fahrzeug zur Verfügung steht. Im Antriebsmodus der Getriebevorrichtung 15 wird das Fahrzeug 1 gemäß Fig. 2 wie das Fahrzeug gemäß Fig. 1 im Bereich beider Fahrzeugachsen 2 und 3 angetrieben. Im Torque-Vectoring-Betriebsmodus der Getriebevorrichtung 15 beeinflusst neben dem Heckantrieb auch die "aktive" Fahrzeugvorderachse das Fahrverhalten des Fahrzeuges 1.

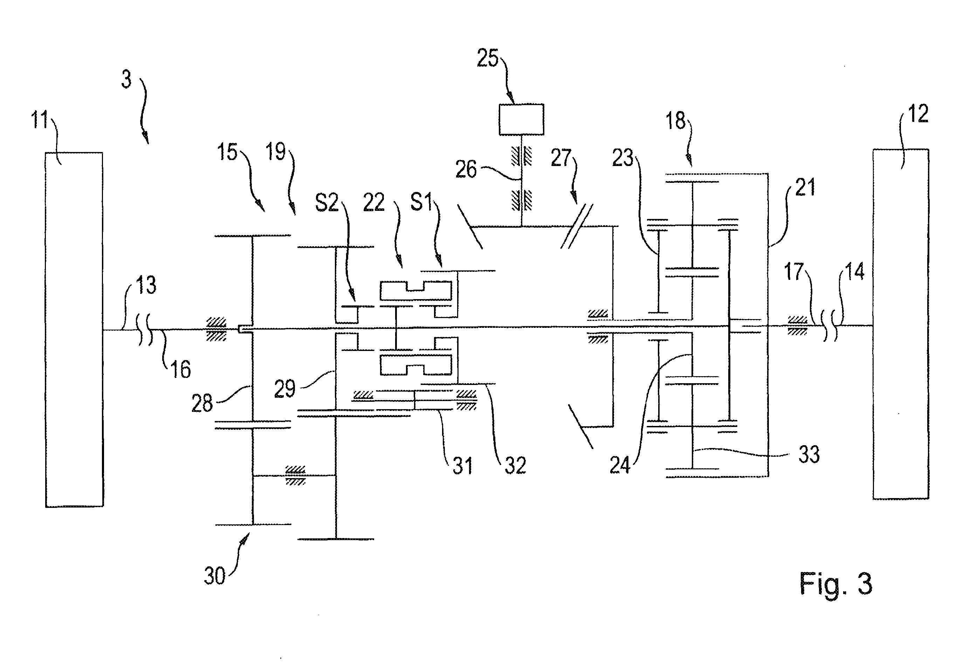

In Fig. 3 bis Fig. 5 sind mehrere Räderschemata verschiedener Ausführungsbeispiele der Getriebevorrichtung 15 gemäß Fig. 1 und Fig. 2 dargestellt, die zur Darstellung des Antriebsmodus und des Torque-Vectoring-Betriebsmodus einen gemeinsamen grundlegenden Aufbau aufweisen.

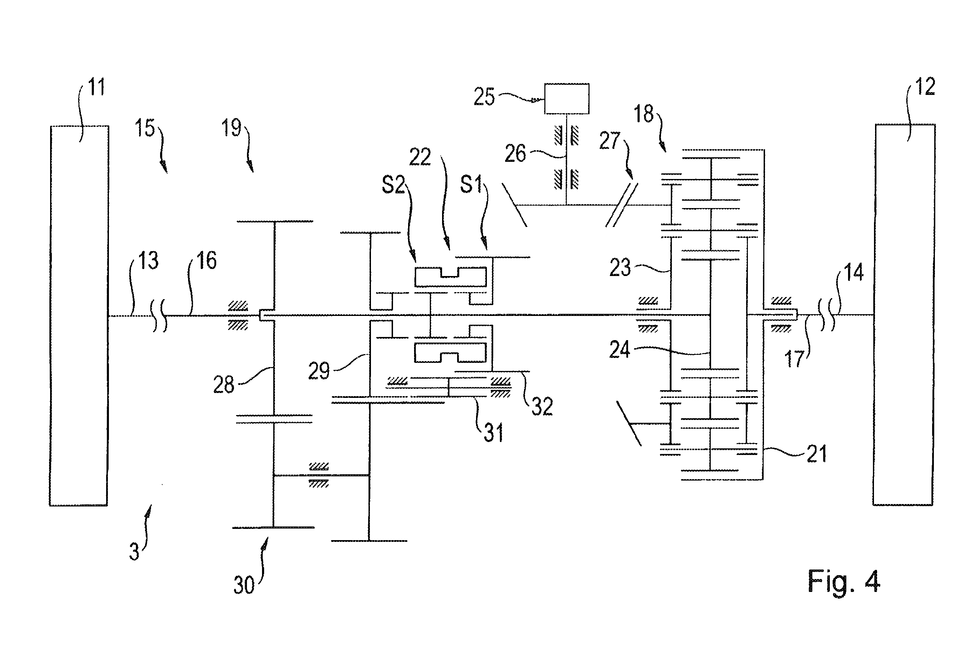

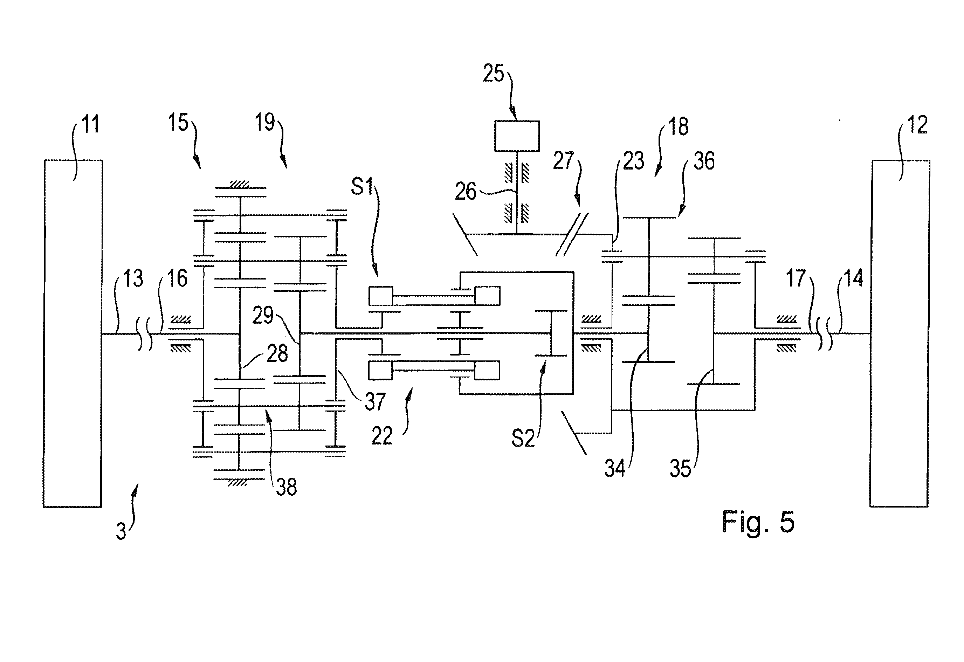

So sind die Getriebevorrichtungen 15 gemäß Fig. 3 bis Fig. 5 jeweils mit zwei Ausgangswellen 16, 17 und mit zwei miteinander in Wirkverbindung stehenden mehrwelligen Planetenradsätzen 18, 19 ausgebildet. Dabei ist bei den Ausführungsbeispielen der Getriebevorrichtung 15 gemäß Fig. 3 bis Fig. 5 jeweils eine als Sonnenrad ausgebildete Welle 28 eines zweiten Planetenradsatzes 19 mit der Ausgangswelle 16 verbunden. Die Ausgangswelle 17 der in Fig. 3 und Fig. 4 gezeigten Ausführungsbeispiele der Getriebevorrichtung 15 ist jeweils mit einer als Hohlrad ausgebildeten Welle 21 des ersten Planetenradsatzes 18 verbunden, während die Ausgangswelle 17 bei dem in Fig. 5 ausgebildeten Ausführungsbeispiel der Getriebevorrichtung 15 mit einer als Sonnenrad ausgebildeten Welle 35 des ersten Planetenradsatzes 18 verbunden ist.

Zusätzlich ist bei allen in der Zeichnung dargestellten Ausführungsbeispielen der Getriebevorrichtung 15 zwischen den beiden Planetenradsätzen 18 und 19 eine Schalteinrichtung 22 angeordnet, welche zwischen zwei verschiedenen Betriebszuständen bzw. Schaltstellungen S1 und S2 umschaltbar ist und die beiden Ausgangswellen 16 und 17 der Getriebevorrichtung 15 über einen ersten Leistungspfad oder einen zweiten Leistungspfad der Getriebevorrichtung 15 miteinander verbindet.

Bei der Getriebevorrichtung 15 gemäß Fig. 3 ist im Bereich eines Sonnenrades 24 des ersten Planetenradsatzes 18 und bei den Getriebevorrichtungen 15 gemäß Fig. 4 und Fig. 5 im Bereich eines Steges 23 des ersten Planetenradsatzes ein Drehmoment einer elektrischen Maschine 25 in den ersten oder in den zweiten Leistungspfad der Getriebevorrichtung 15 einleitbar, wobei das Drehmoment der elektrischen Maschine 25 bei zugeschaltetem ersten Leistungspfad zu gleichen Teilen und mit gleichen Vorzeichen und bei zugeschaltetem zweiten Leistungspfad zu gleichen Teilen mit unterschiedlichen Vorzeichen zwischen den Ausgangswellen 16, 17 verteilt und diesen zugeführt wird.

Der erste Planetenradsatz 18 bei dem in Fig. 3 dargestellten Ausführungsbeispiel der Getriebevorrichtung 15 als einfacher Minusplanetenradsatz ausgebildet, während der zweite Planetenradsatz 19 als Plusplanetenradsatz ausgeführt ist. Bei der Getriebevorrichtung 15 gemäß Fig. 4 ist der erste Planetenradsatz 18 als Doppelplanetenradsatz und der zweite Planetenradsatz 19 als Plusplanetenradsatz ausgeführt, während der erste Planetenradsatz 18 der Getriebevorrichtung 15 gemäß Fig. 5 als Plusplanetenradsatz und der zweite Planetenradsatz 19 als Doppelplanetenradsatz ausgebildet ist.

Grundsätzlich ist mit allen in der Zeichnung dargestellten Ausführungsformen der Getriebevorrichtung 15 in der ersten Schaltstellung S1 der Schalteinrichtung 22 der Antriebsmodus darstellbar. Dabei besteht die Möglichkeit das Fahrzeug 1 sowohl im Zugbetrieb als auch im Schubbetrieb zu betreiben, wobei insbesondere im Schubbetrieb des Fahrzeuges während eines generatorischen Betriebes der elektrischen Maschine 25 Bremsenergie rekuperierbar ist.

Ist die Schalteinrichtung 22 in ihre zweite Schaltstellung S2 verschoben, wird über die Getriebevorrichtung 15 ein von der elektrischen Maschine 25 zur Verfügung gestelltes Drehmoment zu gleichen Teilen und mit unterschiedlichen Vorzeichen in Richtung der Antriebsräder 11 und 12 geführt und somit eines der Antriebsräder 11 oder 12 beschleunigt, während das andere Antriebsrad 12 oder 11 im gleichen Umfang abgebremst wird. Damit wird im Bereich der zweiten Fahrzeugachse 3 ein so genanntes Torque-Vectoring durchgeführt, um in bekannter Art und Weise eine Fahrstabilität des Fahrzeuges 1 zu verbessern und während Kurvenfahrten ein agileres Verhalten des Fahrzeuges 1 zur Verfügung stellen zu können.

Die elektrische Maschine 25 bzw. eine Motorausgangswelle 26 der elektrischen Maschine 25 ist bei allen in der Zeichnung dargestellten Ausführungsbeispielen der Getriebevorrichtung 15 lotrecht zu den Ausgangswellen 16 und 17 der Getriebevorrichtung 15 angeordnet. Zwischen dem Sonnenrad 24 des ersten Planetenradsatzes 18 der Getriebevorrichtung 15 gemäß Fig. 3 bzw. dem Steg 23 des ersten Planetenradsatzes 18 der Getriebevorrichtung 15 gemäß Fig. 4 und Fig.5 und der elektrischen Maschine 25 bzw. deren Motorausgangswelle 26 ist jeweils eine Kegelradstufe 27 vorgesehen. Damit ist die elektrische Maschine 25 bzw. die Motorausgangswelle 26 um 90° gegenüber der Radachse gedreht angeordnet und in einem Bereich eines Fahrzeuges positionierbar, in dem ausreichend Bauraum zur Verfügung steht.

Der zweite Planetenradsatz 19 der Getriebevorrichtung 15 gemäß Fig. 3 ist mit zwei Sonnenrädern 28, 29 ausgeführt, die jeweils unterschiedliche Zähnezahlen aufweisen und mit Stufenplanetenrädern 30 kämmen. Zur Drehmomentumkehr ist dieses Ausführungsbeispiel mit einem zusätzlichen Planetenrad 31 sowie mit einem weiteren Sonnenrad 32 ausgeführt, welches in der ersten Schaltstellung S1 der Schalteinrichtung 22 mit dem Steg 23 des ersten Planetenradsatzes 18 in Wirkverbindung steht. Die Ausgestaltung des zweiten Planetenradsatzes 19 gemäß Fig. 3 weist in der ersten Schaltstellung S1 der Schalteinrichtung 22 einen Verzahnungswirkungsgrad von etwa 97% auf und ein Teil des von der elektrischen Maschine 25 erzeugten Drehmomentes wird in dessen Bereich über drei in axialer Richtung nebeneinander angeordnete Zahneingriffe übertragen.

Das in der ersten Schaltstellung S1 der Schalteinrichtung 22 im Bereich des Gehäuses der Getriebevorrichtung 15 abzustützende Drehmoment wird über die Lagerung der Stufenplanetenräder 30 des zweiten Planetenradsatzes 19 in das Gehäuse der Getriebevorrichtung 15 eingeleitet.

In der zweiten Schaltstellung S2 der Schalteinrichtung 22 ist das zweite Sonnenrad 29 mit dem Steg 23 des ersten Planetenradsatzes 18 verbunden, womit das Drehmoment der elektrischen Maschine 25 von der Motorausgangswelle 26, über die Kegelradstufe 27, das Sonnenrad 24 des ersten Planetenradsatzes 18 und damit kämmenden Planetenrädern 33 sowie den Steg 23 des ersten Planetenradsatzes 18 über das zweite Sonnenrad 29 des zweiten Planetenradsatzes 19 und damit kämmenden Stufenplanetenrädern 30 auf das erste Sonnenrad 28 des zweiten Planetenradsatzes 19 und von dort über die Ausgangswelle 16 und die Antriebswelle 13 dem Antriebsrad 11 hälftig zugeführt wird. Die andere Hälfte des von der elektrischen Maschine 25 zur Verfügung gestellten Drehmomentes wird von den Planetenrädern 33 des ersten Planetenradsatzes 18 und das damit kämmende Hohlrad 21 über die Ausgangswelle 17 und die Antriebswelle 14 zum Antriebsrad 12 weitergeleitet.

Die in Fig. 4 dargestellte zweite Ausführungsform der Getriebevorrichtung 15 unterscheidet sich von dem in Fig. 3 dargestellten Ausführungsbeispiel der Getriebevorrichtung 15 im Wesentlichen im Bereich des ersten Planetenradsatzes 18, der bei der Getriebevorrichtung 15 gemäß Fig. 4 als Doppelplanetenradsatz bzw. als Plusplanetenradsatz ausgeführt ist, um die elektrische Maschine 25 über die Kegelradstufe 27 an den Steg 23 des ersten Planetenradsatzes 18 anbinden zu können. Die Sonne 24 des ersten Planetenradsatzes 18 wird über die Schaltung mit dem zweiten Planetenradsatz 19 verbunden.

Bei der Getriebevorrichtung 15 gemäß Fig. 4 führen die im Bereich der Schalteinrichtung 22 sowie im Bereich der zwischen den beiden Planetenradsätzen 18 und 19 verlaufenden Wellen kleinere Drehmomente als bei der Getriebevorrichtung 15 gemäß Fig. 3, wobei jedoch die Drehzahlen in diesen Bereichen bei der Getriebevorrichtung 15 gemäß Fig. 4 höher als bei der Getriebevorrichtung 15 gemäß Fig. 3 sind.

Bei der Getriebevorrichtung 15 gemäß Fig. 5 ist der erste Planetenradsatz 18 als Plusplanetenradsatz mit einem ersten Sonnenrad 34 und einem zweiten Sonnenrad 35 ausgebildet, die mit Stufenplanetenrädern 36 kämmen. Der als Doppelplanetenradsatz ausgebildete zweite Planetenradsatz 19 der Getriebevorrichtung 15 umfasst neben einem drehfest ausgeführten Hohlrad die als Sonnenrad 28 ausgeführte Welle 16 sowie ein zweites Sonnenrad 29, wobei die beiden Sonneräder 28 und 29 mit unterschiedlicher Zähnezahl ausgebildet sind.

In der ersten Schaltstellung S1 der Schalteinrichtung 22 ist das erste Sonnenrad 34 des ersten Planetenradsatzes 18 über die Schalteinrichtung 22 mit einem Steg 37 des zweiten Planetenradsatzes 19 verbunden. In der zweiten Schaltstellung S2 ist das erste Sonnenrad 34 des ersten Planetenradsatzes 18 über die Schalteinrichtung 22 mit dem zweiten Sonnenrad 29 des zweiten Planetenradsatzes 19 gekoppelt und der zweite Leistungspfad in der Getriebevorrichtung 15 zugeschaltet.

Im Betrieb der Getriebevorrichtung 15 gemäß Fig. 5 treten im Bereich von Doppeltplanetenrädern 38 des zweiten Planetenradsatzes geringere Planetenrelativdrehzahlen als bei dem Ausführungsbeispiel der Getriebevorrichtung 15 gemäß Fig. 4 auf. Des Weiteren ist der zweite Planetenradsatz 19 der Getriebevorrichtung 15 gemäß Fig. 5 mit nur zwei axial nebeneinander angeordneten Zahneingriffen ausgeführt, womit ein Verzahnungswirkungsgrad des zweiten Planetenradsatzes 19 gemäß Fig. 5 höher ist als der Verzahnungswirkungsgrad des zweiten Planetenradsatzes 19 gemäß Fig. 3 und Fig. 4.

Zusätzlich wirken im Betrieb der Getriebevorrichtung 15 gemäß Fig. 5 im Vergleich zu der Getriebevorrichtung 15 gemäß Fig. 4 im Bereich der Schalteinrichtung 22 kleinere Drehmomente, womit die Belastungen im Bereich der Schalteinrichtung 22 niedriger und die zum Umschalten der Schalteinrichtung 22 aufzubringenden Schaltkräfte kleiner sind.

Im Gegensatz hierzu ist die Getriebevorrichtung 15 gemäß Fig. 5 im Bereich des zweiten Planetenradsatzes 19 durch die gestuft ausgeführten inneren Planetenräder 38 konstruktiv aufwändiger als der zweite Planetenradsatz 19 gemäß Fig. 4 ausgeführt. Darüber hinaus sind im Bereich der gestuften Doppelplanetenräder 38 des zweiten Planetenradsatzes 19 der Getriebevorrichtung 15 gemäß Fig. 5 im Betrieb der Getriebevorrichtung 15 auftretende Axialkräfte abzustützen.

Mit der erfindungsgemäßen Getriebevorrichtung ist sowohl der Antriebsmodus als auch der Torque-Vectoring-Betriebsmodus mit einem einzigen System darstellbar, das durch einen geringen Bauraumbedarf, ein niedriges Gesamtgewicht sowie durch geringe Herstellkosten gekennzeichnet ist.

Grundsätzlich ist die erfindungsgemäße Getriebevorrichtung durch eine Mehrfachfunktionalität mit nur einem Elektromotor gekennzeichnet. Dabei sind in den verschiedenen Betriebsmodi der eine kompakte Bauweise sowie ein geringes Eigengewicht aufweisenden Getriebevorrichtung nach der Erfindung jeweils passende Übersetzungsverhältnisse zur Verfügung stellbar. Darüber hinaus ist die kostengünstig herstellbare Getriebevorrichtung in allen Betriebspunkten mit einem hohen Wirkungsgrad betreibbar.

### Bezugszeichen

- 1: Fahrzeug
- 2: erste Fahrzeugachse
- 3: zweite Fahrzeugachse
- 4, 5: Antriebsrad
- 6, 7: Antriebswelle
- 8: Differentialgetriebeeinheit
- 9: Antriebsaggregat
- 10: Getriebeeinrichtung
- 11, 12: Antriebsrad
- 13, 14: Antriebswelle
- 15: Getriebevorrichtung
- 16, 17: Ausgangswelle
- 18: erster Planetenradsatz
- 19: zweiter Planetenradsatz
- 21: Hohlrad des ersten Planetenradsatzes
- 22: Schalteinrichtung
- 23: Steg des ersten Planetenradsatzes
- 24: Sonnenrad des ersten Planetenradsatzes
- 25: elektrische Maschine
- 26: Motorausgangswelle der elektrischen Maschine
- 27: Kegelradstufe
- 28: erstes Sonnerad des zweiten Planetenradsatzes
- 29: zweites Sonnenrad des zweiten Planetenradsatzes
- 30: Stufenplanetenrad des zweiten Planetenradsatzes
- 31: zusätzliches Planetenrad
- 32: weiteres Sonnerad
- 33: Planetenräder des ersten Planetenradsatzes
- 34: erstes Sonnenrad des ersten Planetenradsatzes
- 35: zweites Sonnenrad des ersten Planetenradsatzes
- 36: Stufenplanetenräder des ersten Planetenradsatzes
- 37: Steg des zweiten Planetenradsatzes
- 38: gestufte Doppelplanetenräder des zweiten Planetenradsatzes

## Patentansprüche

1. Getriebevorrichtung (15) mit wenigstens zwei Ausgangswellen (16, 17) und mindestens zwei miteinander in Wirkverbindung stehenden mehrwelligen Planetenradsätzen (18, 19), wobei jeweils eine Welle (21, 28; 23, 28) eines Planetenradsatzes (18, 19) mit einer Ausgangswelle (16, 17) in Wirkverbindung bringbar ist und eine Schalteinrichtung (22) vorgesehen ist, **dadurch gekennzeichnet, dass** über die Schalteinrichtung (22) zwischen einem ersten Leistungspfad und einem zweiten Leistungspfad zwischen den Ausgangswellen (16, 17) umschaltbar ist, wobei im Bereich einer weiteren Welle (23) eines der Planetenradsätze (18) ein Drehmoment einer elektrischen Maschine (25) in den ersten oder den zweiten Leistungspfad einleitbar ist, und wobei das Drehmoment der elektrischen Maschine (25) bei geschaltetem ersten Leistungspfad zu gleichen Teilen und mit gleichen Vorzeichen und bei geschaltetem zweiten Leitungspfad zu gleichen Teilen mit unterschiedlichen Vorzeichen zu den Ausgangswellen (16, 17) geführt wird, wobei eine Motorausgangswelle (26) der elektrischen Maschine (25) lotrecht zu einer der Ausgangswellen (16, 17) angeordnet ist.

2. Getriebevorrichtung nach Anspruch 1, **dadurch gekennzeichnet, dass** ein erster Planetenradsatz (18), in dessen Bereich das Drehmoment der elektrischen Maschine (25) einleitbar ist, als einfacher Minusplanetenradsatz ausgebildet ist.

3. Getriebevorrichtung nach Anspruch 1 oder 2, **dadurch gekennzeichnet, dass** ein zweiter Planetenradsatz (19) als Plusplanetenradsatz ausgebildet ist.

4. Getriebevorrichtung nach Anspruch 1, **dadurch gekennzeichnet, dass** ein erster Planetenradsatz (18), in dessen Bereich das Drehmoment der elektrischen Maschine (25) einleitbar ist, als Doppelplanetenradsatz ausgebildet ist.

5. Getriebevorrichtung nach Anspruch 4, **dadurch gekennzeichnet, dass** ein zweiter Planetenradsatz (19) als Plusplanetenradsatz ausgebildet ist.

6. Getriebevorrichtung nach Anspruch 1, **dadurch gekennzeichnet, dass** ein erster Planetenradsatz (18), in dessen Bereich das Drehmoment der elektrischen Maschine (25) einleitbar ist, als Plusplanetenradsatz ausgebildet ist.

7. Getriebevorrichtung nach Anspruch 6, **dadurch gekennzeichnet, dass** ein zweiter Planetenradsatz (19) als Doppelplanetenradsatz ausgebildet ist.

8. Getriebevorrichtung nach einem der Ansprüche 1 bis 7, **dadurch gekennzeichnet, dass** die Schalteinrichtung (22) zwischen den Planetenradsätzen (18, 19) angeordnet ist.

## Claims

1. Transmission device (15) having at least two output shafts (16, 17) and at least two multi-shaft planetary gear sets (18, 19) which are operatively connected to one another, wherein it is possible for in each case one shaft (21, 28; 23, 28) of a planetary gear set (18, 19) to be placed in operative connection with an output shaft (16, 17), and a shift device (22) is provided, **characterized in that**, by means of the shift device (22), a switch can be made between a first power path and a second power path between the output shafts (16, 17), wherein a torque of an electric machine (25) can be introduced into the first or the second power path in the region of a further shaft (23) of one of the planetary gear sets (18), and wherein when the first power path is engaged, the torque of the electric machine (25) is conducted to the output shafts (16, 17) in equal parts and with the same sign, and when the second power path is engaged, the torque of the electric machine (25) is conducted to the output shafts (16, 17) in equal parts and with opposite signs, wherein a motor output shaft (26) of the electric machine (25) is arranged perpendicular to one of the output shafts (16, 17).

2. Transmission device according to Claim 1, **characterized in that** a first planetary gear set (18), in the region of which the torque of the electric machine (25) can be introduced, is designed as a single minus planetary gear set.

3. Transmission device according to Claim 1 or 2, **characterized in that** a second planetary gear set (19) is designed as a plus planetary gear set.

4. Transmission device according to Claim 1, **characterized in that** a first planetary gear set (18), in the region of which the torque of the electric machine (25) can be introduced, is designed as a double planetary gear set.

5. Transmission device according to Claim 4, **characterized in that** a second planetary gear set (19) is designed as a plus planetary gear set.

6. Transmission device according to Claim 1, **characterized in that** a first planetary gear set (18), in the region of which the torque of the electric machine (25) can be introduced, is designed as a plus planetary gear set.

7. Transmission device according to Claim 6, **characterized in that** a second planetary gear set (19) is designed as a double planetary gear set.

8. Transmission device according to one of Claims 1 to 7, **characterized in that** the shift device (22) is arranged between the planetary gear sets (18, 19).

## Revendications

1. Dispositif de transmission (15) comprenant au moins deux arbres de sortie (16, 17) et au moins deux trains planétaires (18, 19) à plusieurs arbres en liaison fonctionnelle les uns avec les autres, un arbre (21, 28 ; 23, 28) d'un train planétaire (18, 19) pouvant à chaque fois être amené en liaison fonctionnelle avec un arbre de sortie (16, 17) et un dispositif de commutation (22) étant prévu, **caractérisé en ce que** le dispositif de commutation (22) permet de commuter entre un premier chemin de puissance et un deuxième chemin de puissance entre les arbres de sorties (16, 17), un couple d'une machine électrique (25) pouvant être introduit dans le premier ou le deuxième chemin de puissance dans la région d'un autre arbre (23) de l'un des trains planétaires (18), et le couple de la machine électrique (25), lorsque le premier chemin de puissance est commuté, étant guidé à parts égales avec des signes identiques, et lorsque le deuxième chemin de puissance est commuté, à parts égales et avec des signes opposés vers les arbres de sortie (16, 17), un arbre de sortie de moteur (26) de la machine électrique (25) étant disposé à l'aplomb de l'un des arbres de sortie (16, 17).

2. Dispositif de transmission selon la revendication 1, **caractérisé en ce qu'**un premier train planétaire (18), dans la région duquel le couple de la machine électrique (25) peut être introduit, est réalisé sous forme de train planétaire négatif simple.

3. Dispositif de transmission selon la revendication 1 ou 2, **caractérisé en ce qu'**un deuxième train planétaire (19) est réalisé sous forme de train planétaire positif.

4. Dispositif de transmission selon la revendication 1, **caractérisé en ce qu'**un premier train planétaire (18), dans la région duquel le couple de la machine électrique (25) peut être introduit, est réalisé sous forme de train planétaire double.

5. Dispositif de transmission selon la revendication 4, **caractérisé en ce qu'**un deuxième train planétaire (19) est réalisé sous forme de train planétaire positif.

6. Dispositif de transmission selon la revendication 1, **caractérisé en ce qu'**un premier train planétaire (18), dans la région duquel le couple la machine électrique (25) peut être introduit, est réalisé sous forme de train planétaire positif.

7. Dispositif de transmission selon la revendication 6, **caractérisé en ce qu'**un deuxième train planétaire (19) est réalisé sous forme de train planétaire double.

8. Dispositif de transmission selon l'une quelconque des revendications 1 à 7, **caractérisé en ce que** le dispositif de commutation (22) est disposé entre les trains planétaires (18, 19).
